Europäisches Patentamt

European Patent Office

Office européen des brevets

(19)

(11) Publication number: **0 123 387**
**B1**

(12) **EUROPEAN PATENT SPECIFICATION**

(45) Date of publication of patent specification: **14.10.87**

(51) Int. Cl.⁴: **B 23 B 27/10, B 23 Q 11/10**

(21) Application number: **84301260.0**

(22) Date of filing: **27.02.84**

(54) Method and apparatus for machining.

(30) Priority: **28.02.83 US 470193**
**23.02.84 US 580730**

(43) Date of publication of application:
**31.10.84 Bulletin 84/44**

(45) Publication of the grant of the patent:
**14.10.87 Bulletin 87/42**

(84) Designated Contracting States:
**BE CH DE FR GB IT LI NL SE**

(56) References cited:
**AT-B- 218 821**
**DE-A-3 004 166**
**FR-A-1 279 749**
**FR-A-2 244 590**
**US-A-2 653 517**
**US-A-2 848 790**
**US-A-2 925 224**
**US-A-4 302 135**

(73) Proprietor: **Yankoff, Gerald K.**
**5436 Palisades Drive**
**Cincinnati Ohio 45238 (US)**

(72) Inventor: **Yankoff, Gerald K.**
**5436 Palisades Drive**
**Cincinnati Ohio 45238 (US)**

(74) Representative: **Allen, Oliver John Richard et al**
**Lloyd Wise, Tregear & Co. Norman House**
**105-109 Strand**
**London, WC2R 0AE (GB)**

EP 0 123 387 B1

## Description

This invention relates to machining and, more particularly, to a method and apparatus for performing metal working operations such as turning, boring, shaping and milling at reduced power levels with increased tool life and efficiency.

A cutting tool generally includes a holder and one or more cutting inserts each having a surface terminating with one or more cutting edges. The holder is formed with a socket to clamp the cutting inserts in a position so that in metal working operations such as turning, boring, shaping and milling, the cutting edges of the inserts engage a workpiece and remove a chip of metal. The chips comprise a plurality of thin sections of metal which slide relative to one another along shear planes when separated from the workpiece. This shearing movement of the thin metal sections forming the chip generates a substantial amount of heat. In fact, the heat generated along the shear planes in the chip may be even greater than the heat generated by abrasion of the cutting edge of the insert as it contacts the workpiece.

The major causes of failure of the cutting inserts of machine tools are abrasion between the cutting insert and workpiece, and a problem known as cratering.

Cratering results from the tremendous heat developed in the chip and its engagement with the cutting insert. As the metal forming the chip is sheared from the workpiece, it frictionally engages the top surface of the insert and in some cases the socket portion of the tool holder which secures the insert in place.

In US—A—2848790, the insert includes a chip breaker groove on its upper surface which is adapted to engage the chip and turn it upwardly away from at least a portion of the insert surface and the socket portion of the tool holder. However, even with a chip breaker groove, at least a portion of the upper surface of the insert inwardly from its cutting edge is in frictional engagement with the hottest portion of the chip. Due to this frictional engagement and the tremendous heat generated by the chip, material from the upper surface of the insert is melted and carried away forming grooves or craters in the insert. Once these craters become deep enough, the entire insert is subject to cracking along its cutting edge and along the sides of the insert due to abrasive contact with the workpiece, which quickly leads to failure.

In US—A—2848790, cooling and lubrication of the cutting insert-workpiece interface is attempted to avoid cratering and abrasion wear, by ejecting a jet of coolant from a discharge orifice between the top surface of the insert and the chips.

It has been found however, that if the discharge orifice is placed too close to the cutting edge, the coolant jet cannot be forced beneath the chip since the chip and workpiece form a barrier which deflects the coolant jet creating turbulence instead of a flow beneath the chip. On the other hand, placement of the discharge orifice too far away from the cutting edge causes the chip to turn upwardly without contact of the angled surface of the breaker.

In accordance with one aspect of the invention, a method of machining a workpiece with an insert having a top surface terminating with a cutting edge, at least one discharge orifice being provided and oriented to direct coolant over the top surface of the insert toward the cutting edge, comprises engaging the workpiece with the cutting edge to form chips overlying the top surface of the insert, and ejecting a jet of coolant from the discharge orifice between the top surface of the insert and the chips, characterised in that the insert is moved at a feed rate such that the insert moves a predetermined distance with respect to the longitudinal axis of the workpiece for each revolution of the workpiece, in that the discharge orifice is positioned relative to the insert so that the discharge orifice is spaced from the cutting edge in the range of about 6 to 10 times the predetermined distance moved by the insert for each revolution of the workpiece, and in that the coolant jet is provided with power which is greater than the power required to cut the material.

In accordance with another aspect of the invention, an apparatus for machining a workpiece comprises an insert having a top surface terminating with a cutting edge, means defining a discharge orifice which lies on the top surface of the insert, means for conveying coolant to the discharge orifice, and means for ejecting the coolant at velocity from the discharge orifice across the top surface of the insert toward the cutting edge, characterised in that the insert is moved a predetermined distance with respect to the longitudinal axis of the workpiece for each revolution of the workpiece, in that the discharge orifice is spaced from the cutting edge of the insert in the range of about 6 to 10 times the predetermined distance, and in that the ejecting means has a power greater than the power required to cut the material.

The machining operation may be either cutting, boring, turning, milling, grooving, threading or drilling.

The chips produced in such a machining operation are effectively cooled, and fractured from the workpiece in relatively small lengths, while the surface of the cutting insert performing the machining operation is lubricated and cooled.

In particular, the specified spacing of the discharge or release orifice from the cutting edge of the insert provides improved results in machining and breakage of chips formed from the workpiece.

The apparatus preferably includes a tool holder having a leading end formed with the discharge or release orifice, the tool holder including a socket in which the cutting insert is mounted, the cutting insert being adapted to engage the rotating workpiece to form chips which overlie the surface of the cutting insert and the release orifice.

The ejecting means eject coolant from the release orifice at high velocity along the top surface of the cutting insert and beneath the chips.

Preferably, the cutting operation is performed at a predetermined feed rate and depth of cut. As is well known, the feed rate represents the distance moved by the tool holder for each revolution of the workpiece.

The release orifice may be either circular or noncircular in cross section. If circular, the release orifice is formed with a diameter preferably approximately equal to the depth of the cut taken by the cutting insert. A noncircular orifice is formed with a cross section having a smaller and larger transverse dimension.

Preferably, the larger transverse dimension of the noncircular release orifice is approximately equal to the depth of cut taken by the cutting insert.

The means for conveying coolant comprises means for conveying coolant to the tool holder and means for conveying the coolant through the tool holder and ejecting it from the release orifice at high velocity.

The coolant is conveyed to the tool holder by a delivery line connected at one end to the holder and at the other end to a high pressure pump. Preferably, the pump and delivery line are sized to convey the coolant to the tool holder at a velocity in the range of about 20 to 40 feet per second (6.1 to 12.2 m/s). The coolant is preferably conveyed within the tool holder by a main passageway communicating at one end with the delivery line, and a transition passageway disposed between the main passageway and the release orifice.

Preferably, the walls of the transition passageway taper from the main passageway to the release orifice so that it is frusto-conical in shape. The angle formed by the walls of the transition passageway at the release orifice is preferably less than about 20 degrees. Assuming the release orifice is circular in cross section, the length of the transition passageway is preferably about 20 times the diameter of the release orifice. In addition, the walls of the transition passageway are highly polished in any one of a variety of known methods. The dimensions, frusto-conical shape and polished walls of the transition passageway permit acceleration of the coolant between the main passageway and the release orifice to a velocity on the order of 10 times that within the main passageway and delivery line, depending on the particular machining conditions, as discussed in detail below.

More particularly a high velocity, high pressure coolant jet is directed between the upper surface of a cutting insert and the underside of a chip sheared from a workpiece by the insert, from a location beneath and covered by the chip. The release orifice formed in the tool holder herein is preferably positioned relative to the cutting edge of the cutting insert so that the chips produced in the machining operation overlie the release orifice. In effect, an enclosure or cavity is produced surrounding the release orifice which is formed by the workpiece, the upper surface of the cutting insert, the underside of the chip and the tool holder. The coolant jet ejected at high pressure and high velocity from the release orifice is confined within this cavity and undergoes minimal energy losses until the chip is broken away from the workpiece.

Several advantages over prior art machine tools and cooling techniques are provided by the invention wherein a high velocity, high pressure coolant jet is ejected in a confined area or cavity directly beneath the chips being formed from the workpiece It has been found that by maintaining high pressure and velocity at a location directly beneath the chips being formed, the coolant jet can pierce the heat barrier produced by abrasion at the cutting insert-workpiece interface and by the shearing motion within the chips being formed. Due to the large surface area presented by the underside of the chips, and the extreme temperature differential of the chips and coolant, rapid heat transfer occurs between the chips and coolant. It is believed that the chip temperature is lowered so rapidly, on the order of 0.1 seconds or less, that its semi-plastic lattice structure is actually solidified in a disrupted molecular configuration. This results in the formation of very brittle chips which are much easier to break from the workpiece than chips having a normal lattice structure. In the process of conducting the heat from the insert-workpiece interface, and the chips, a portion of the coolant becomes vaporized. Since the coolant jet is ejected into an essentially closed cavity, a substantial vapor pressure is developed by the vaporized coolant beneath the chip in addition to the pressure applied by new coolant continuously being ejected from the release orifice. The combined pressure of the vaporized coolant and line pressure builds within the closed cavity beneath the chip which fractures the chips from the workpiece and removes them from the cutting area.

It has been found that at least some of the coolant jet is not vaporized but flows at high velocity within the enclosed cavity as a thin film along the upper surface of the cutting insert. This thin film of coolant performs two functions. First, at least some of the coolant film reaches the cutting edge-workpiece interface and flows between the microscopic interstitial surface irregularities of both the cutting edge and workpiece. This provides at least some lubrication and removes some of the heat produced thereat. Secondly, the thin coolant film on the upper surface of the cutting insert exerts a hydrodynamic fluid force against the chips being formed which tends to urge them upwardly out of contact with the insert. This reduces abrasive wear of the cutting insert and cratering formed by engagement of the chips with the insert.

The invention achieves a true coolant assisted machining operation in contrast to prior art flood cooling techniques. A high velocity, high pressure coolant jet is introduced at a location beneath the chips being formed where it is confined in an essentially sealed or closed cavity so that its pressure and velocity are maintained with only minimal losses. The introduction of a high velocity, high pressure coolant jet beneath the chip and immediately adjacent the cutting edge-workpiece interface permits the coolant jet to pierce the vapor or heat barrier produced in the area of the cut so that effective cooling is provided at the cutting edge-workpiece interface and in the chips where extremely high heat is produced. Flood cooling systems are incapable of piercing this vapor barrier and therefore cannot achieve cooling of the cutting edge-workpiece interface or the immediately adjacent area of the chip.

The invention will now be described, by way of example, with reference to the accompanying drawings, in which:

Figure 1 is a partial isometric view, which is greatly exaggerated for purposes of illustration, showing a turning holder in accordance with this invention in the process of taking a cut on a cylindrical piece of stock;

Figure 2 is a partial isometric view of the turning holder shown in Figure 1;

Figure 3 is an enlarged side view of figure 1 in the area of the cut;

Figure 3a is an enlarged side view of Figure 1 at the beginning of a cut to form a chip;

Figure 3b is a side view as shown in Figure 3a in which the chip being produced contacts the leading edge of the tool holder;

Figure 3c is a side view as shown in Figure 3a in which the chip being produced moves further along the upper surface of the tool holder; and

Figure 4 is a side view, similar to Figure 3 of a prior art flood cooling system.

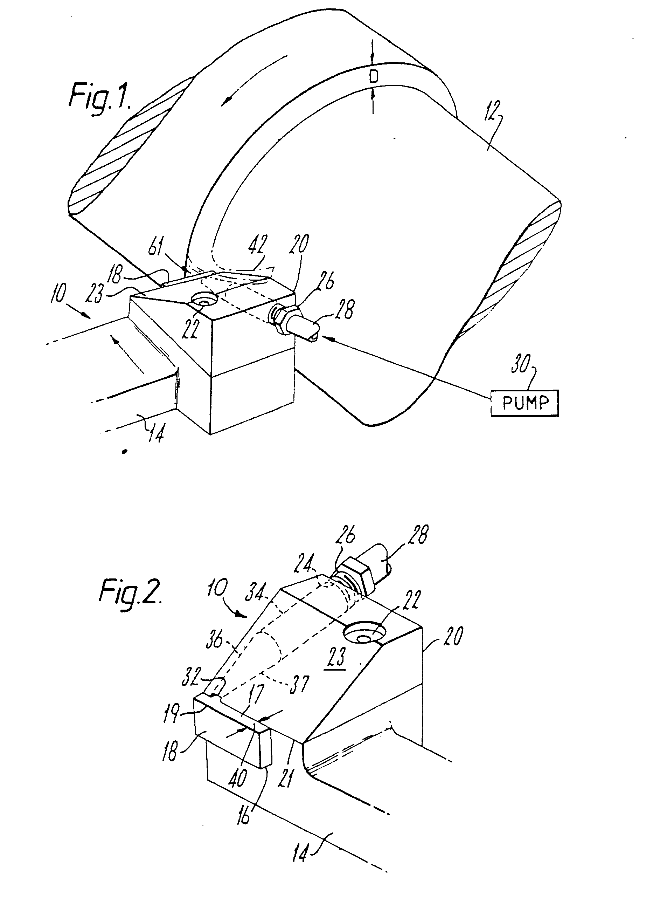

Referring now to the drawings, a tool holder 10 is illustrated for machining a workpiece 12. The workpiece 12 is mounted in a chuck (not shown) which is adapted to rotate the workpiece 12 in the direction indicated in Figure 1. Tool holder 10 is a turning holder for performing a turning operation, but it should be understood that the method of machining is applicable to other machining operations such as milling, boring, cutting, grooving, threading and drilling, and the tool holder 10 is shown herein for purposes of illustration. Tool holder 10 comprises a support bar 14 formed with a cutout 16 adapted to receive a cutting insert 18 having an upper surface 17 terminating with a cutting edge 19. The cutting insert 18 is secured within the cutout 16 by a clamp 20 which extends along the edge of the support bar 14 to a point spaced from the cutting edge 19 of insert 18. The clamp 20 is removably secured to the support bar 14 by a screw 22 or other suitable means.

A port 24 is formed in the end of clamp 20 opposite the cutting insert 18, which receives a fitting 26 connected to one end of a coolant delivery line 28. The opposite end of the coolant delivery line 28 connects to a high pressure pump 30 (shown schematically) having a flow and pressure capacity discussed in detail below. A release orifice 32 is formed in the leading end 21 of clamp 20 opposite the coolant delivery line 28. Although a single release orifice 32 is shown in the drawings, it is contemplated that two or more release orifices 32 may be formed in clamp 20 depending on the cut to be made. Coolant is conveyed through the clamp 20 from the coolant delivery line 28 to the release orifice 32 by a main passageway 34 connected at one end to the coolant delivery line 28, and a transition passageway 36 formed between the main passageway 34 and the release orifice 32. Preferably, the interior wall 37 of transition passageway 36 is highly polished by first buffing it with a diamond paste and then depositing a substance such as silica glass using a known vapor deposition process. The finish of the interior wall 37 of transition passageway 36 should exhibit surface irregularities no larger than about 10 microns.

The pump 30, coolant delivery line 28, and passageways 34, 36, comprise a coolant delivery system for producing a high speed, high pressure coolant jet 38 which is ejected from the release orifice 32. Depending on such factors as the type of material forming workpiece 12, the speed at which the workpiece 12 is rotated and the feed rate of the tool holder 10, a pump 30 having a particular pressure and flow capacity is chosen. An example of how a pump 30 is chosen for a particular application is described in detail below. Preferably, the coolant delivery line 28 is sized according to the flow capacity of pump 30 to produce a coolant flow from the pump 30 to the port 24 in clamp 20 having a velocity of about 20 to 40 ft/s (6.1 to 12.2 m/s). It has been found that at this velocity the coolant travels along the coolant delivery line 28 with minimum turbulence and insignificant losses due to drag. In a preferred embodiment, the diameter of the main passageway 34 formed in clamp 20 is approximately equal to the diameter of the coolant delivery line 28. This ensures that the coolant will maintain a velocity of about 20—40 ft/s (6.1 to 12.2 m/s) within the main passageway 36 of the tool holder 10 to avoid turbulence. Although it is not necessary to form the delivery line 28 or main passageway 34 with circular cross sections, a circular cross section is preferred to simplify machining of the tool holder 10 and because of the availability of standard lines or hoses.

The coolant entering transition passageway 36 accelerates from a velocity of 20—40 ft/s (6.1 to 12.2 m/s) at the main passageway 34 to a velocity typically greater than 400 ft/s (122 m/s), forming a coolant jet 38 which is ejected from the release orifice 32. Preferably, the transition passageway 36 is frusto-conical in shape so that its interior wall 37 tapers uniformly from the main passageway 34 to the release orifice 32. As shown in the Figures, the main passageway 34 and transition passageway 36 are colinear. This allows the coolant to flow in a straight path from the port 24 where it enters holder 10 to the release orifice 32 where it is ejected. The linear fluid path provided by passageways 34, 36 minimizes turbulence and drag which otherwise would slow the coolant stream and prevent the production of the desired velocity at the release orifice 32. The acute angle formed by the wall 37 of the transition passageway at the release orifice 32 is preferably less than about 20 degrees to produce a gradual taper along the length of transition passageway 36 which further aids in the prevention of turbulence as the coolant is accelerated to the release orifice 32. In order to ensure sufficient acceleration of the coolant, the transition passageway 36 is preferably formed with a length approximately equal to 20 times the diameter of the release orifice 32. If the release orifice 32 is not circular in cross section, its area is first calculated and the length of transition passageway 36 is then made to be approximately 20 times the diameter of a circular cross section having the same area. The diameter or largest transverse dimension of the release orifice 32 is preferably approximately equal to the depth D of the cut taken in workpiece 12, as exaggerated in Figure 1 for purposes of illustration. The total cross sectional area of the release orifice 32 is dependent on the energy of the coolant jet 38 required for a particular cutting operation, and an example is provided below in which the size of a release orifice is calculated for a particular application.

The leading end 21 of clamp 20, and the release orifice 32, are spaced from the cutting edge 19 of insert 18 a space 40 which is dependent on the feed rate at which workpiece 12 is machined. As is well known, the feed rate in a turning operation such as illustrated in the Figures is the distance the tool 10 is advanced along the longitudinal axis of the workpiece 12 for every revolution of the workpiece 12. The distance 40 between the cutting edge 19 and release orifice 32 is in the range of about 6 to 10 times the feed rate, or 6 to 10 times the distance the tool holder 10 or insert 18 advances axially along the workpiece 12 for every revolution of the workpiece 12.

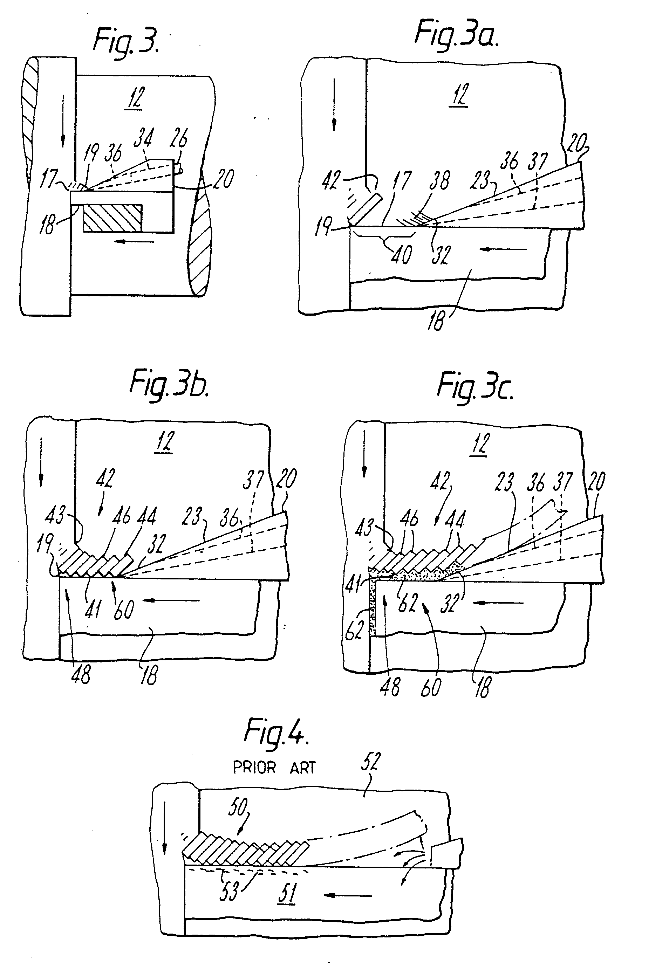

Before discussing the operation tool holder 10, it is important to note the aspects of a typical machining operation and the problems created. As is well known, engagement of the cutting edge 19 of insert 18 with the workpiece 12 removes metal in the form of a chip 42. The chip 42 has a width equal to the depth D of the cut taken in the workpiece 12, and the thickness of the chip 42 is equal to the distance the tool holder 10 is moved laterally along the workpiece 12 for every revolution of the workpiece 12. As best shown in Figures 3b, 3c, the chip 42 is actually formed by shearing the metal on the surface of the workpiece 12 along well-defined shear planes 44. The chip 42 comprises a plurality of individual, thin sections 46 of metal which slide relative to one another along the shear planes 44 as the workpiece 12 rotates while in engagement with the cutting edge 19 of insert 18. It should be understood that the position of the thin sections 46 of chip 42 relative to one another is exaggerated in the drawings for purposes of illustration, and actually appear as an essentially smooth surface.

There are many sources of heat generated in the cutting area 48 immediately surrounding the cutting edge 19 and the underside of chip 42. Heat is generated by the abrasive, frictional contact of the cutting edge 19 with the workpiece 12, by contact of the chip 42 with the upper surface 17 of the insert 18 and also as a result of the friction produced by adjacent sections 46 of chip 42 as they slide relative to one another along the shear planes 44. The temperature at the cutting edge 19-workpiece 12 interface may be on the order of 1500°F (815°C) or higher, and the temperature of the chip 42 as it is sheared from the workpiece 12, induced by the movement of sections 46 forming chip 42 along their shear planes 44, may be even higher.

Referring to Fig. 4, a cutting operation performed with a typical prior art tool design using flood type cooling is illustrated. Using this prior art design, the intense heat developed in the chips 50 can cause cratering of the cutting insert 51 leading to failure. As the chips 50 are sheared from the outer surface of the workpiece 52 they move along the upper surface of the cutting insert 51. The heat produced by the chips 50, as well as their frictional engagement with the upper surface of cutting insert 51, melts and carries away a portion of the metal from the cutting insert 51 creating depressions or craters 53. These craters or pockets of removed metal eventually become sizable enough to induce failure of the cutting insert 51, in combination with the abrasive contact between the cutting insert 51 and workpiece 52.

Recognizing these aspects of a cutting operation, it is necessary to remove as much heat as possible from the cutting area 48 and to resist contact of the chip 42 with the upper surface 17 of cutting insert 18. Such are accomplished as best described with reference to the cutting operation as shown in Figures 3—3c, and outlined as follows. With the pump 30 operating and a coolant jet 38 being ejected from release orifice 32, the cutting edge 19 of insert 18 initially contacts the workpiece 12 and moves inwardly a predetermined depth D. The tool holder 10 is then advanced axially along the longitudinal axis of the workpiece 12 at a predetermined feed rate or axial distance for each revolution of the workpiece 12. The metal on the surface of workpiece 12 is sheared by the cutting edge 19 and a chip 42 begins to move along the upper surface 17 of insert 18 (see Figure 3a). At this point in time, the chip 42 contacts the upper surface of insert 18 and the coolant jet 38 ejected from release orifice 32 strikes the front the chip 42, its top surface and the workpiece 12.

The machining operation proceeds as shown in Figure 3b. The chip 42 continues its advance along the upper surface 17 of cutting insert 18 until it contacts the leading end 21 of clamp 20. As best shown in Figure 2, the leading end 21 of clamp 20 is tapered and clamped directly on the surface 17 of insert 18. As soon as contact is made with the leading end 21 of the clamp 20, the chip 42 is turned upwardly onto the angled surface 23 of the clamp 20 and overlies the release orifice 32. With the chip 42 in engagement with the angled surface 23 of clamp 20, as in Figures 3b, 3c, a substantially sealed enclosure or cavity 60 having six sides or walls is formed around the release orifice 32. Cavity 60 is formed by the workpiece 12, the angled surface 23 of clamp 20, the underside 41 of chip 42 and the upper surface 17 of insert 18. As viewed in Figures 3—3c, the workpiece 12 forms a wall opposite release orifice 32 and behind the chip 42, the top and bottom walls of the cavity 60 are formed by the underside 41 of chip 42 and the top surface 17 of insert 18, respectively, and the angled surface 23 of clamp 20 forms the wall of cavity 60 opposite the cut in the workpiece 12. The edge of chip 42 extending outwardly from the workpiece 12 forms an open area 61 in cavity 60 once the chip 42 contacts clamp 20 and bends upwardly from the surface 17 of insert 18 (see Figure 1). It has been found, however, that the chip 42 tends to twist in the direction of open area 61 toward the upper surface 17 of insert 18, and minimizes the loss of coolant through the open area 61. The chip 42 continues moving along the angled surface 21 of clamp 20 until its end 42, still attached to workpiece 12, is fractured to completely separate the chip 42 from the workpiece 12, as discussed below.

It has been found that in order to effectively remove heat from the underside 41 of chip 42 and the cutting edge 19-workpiece 12 interface within the cutting area 48, a high velocity, high pressure coolant jet 38 must actually reach the cutting area 48 without first becoming completely vaporized. Improved lubrication of the cutting edge 19-workpiece 12 interface and resistance to contact between the upper surface 17 of insert 18 and the chip 42, are also dependent on the successful introduction of the high velocity coolant jet 38 into the cutting area 48.

In the initial phase of the cutting operation, shown in Figure 3a, the pressure of the coolant jet 38 is substantially reduced, immediately upon exit from the release orifice 32. This is because the coolant jet 38 is not confined within an enclosure but exposed to atmospheric pressure. At this stage, the coolant jet 38 flows primarily along the top of the chip 42. However, when the chip 42 advances into contact with the leading end 21 of clamp 20 as shown in Figures 3b, 3c, it overlies the release orifice 32 and seals or encloses it within cavity 60. Although some loss of coolant velocity and pressure is created by the outwardly facing side of cavity 60, or open area 61, the coolant jet 38 ejected from the release orifice 32 is confined within a substantially sealed or closed cavity 60. The cavity 60, in effect, forms an extension of the closed transition passageway 36 within clamp 20 so as to maintain the velocity and pressure developed in the coolant jet 38 at a location beneath the chip 42 in the cutting area 48.

It has been found that the distance 40 between the release orifice 32 and the cutting edge 19 of insert 18 is important to the proper operation of tool holder 10 as described above. The space 40 between the release orifice 32 and cutting edge 19 is in the range of about 6 to 10 times the feed rate of the machining operation or 6 to 10 times the axial distance moved by tool holder 10 for each revolution of workpiece 12. Experiments have shown that if the release orifice 32 is placed too close to the cutting edge 19, the coolant jet 38 cannot be forced beneath the chip 42. The chip 42 and workpiece 12 form a barrier which deflects the coolant jet 38 creating turbulence instead of a flow beneath the chip 42. Placement of the release orifice 32 too far away from the cutting edge 19 does not permit the chip 42 to properly seal against the angled surface 23 of clamp 20, which is necessary to form cavity 60. It has been found that the coolant jet 38 at least partially cools the top of chip 42 as it is initially formed. This creates a temperature differential between the top surface and underside 41 of chip 42 which tends to bend the chip 42 upwardly. If the clamp 20 is positioned too far from the cutting edge 19 of insert 18, the chip 42 is turned upwardly away from the insert 18 before it can contact the angled surface 23 of clamp 20. It has been found that the positioning of the release orifice 32 relative to the cutting edge 19, specified above, prevents the chip 42 from being turned upwardly from the surface 17 of insert 18 without contacting with the angled surface 23 of clamp 20.

Several advantages are realized by the introduction of a high velocity, high pressure coolant jet 38 between the upper surface 17 of cutting insert 18 and the underside 41 of chip 42 from the confined location of release orifice 32 beneath the chip 42. It has been found that under these conditions, the high velocity coolant jet 38 produced is capable of piercing the vapor barrier developed in the cutting area 48 by the heat generated from the formation of chips 42 and the contact between the cutting edge 19 and workpiece 12. One advantage in reducing the heat produced at the underside of chip 42 is that melting of the insert 18 is substantially reduced, and problems of cratering and cutting edge abrasion are thus lessened which increases insert life.

The second benefit obtained by the conduction of heat away from the chip 42 within cutting area 48 relates to chip removal. Since the coolant jet 38 is confined within the cavity 60, there is an efficient heat transfer between the very hot chip 42 and insert 18, and the ambient temperature coolant jet 38. Due to the large surface area presented by the underside 41 of chip 42 within the cavity 60, it has been found that a substantial reduction in the heat of the chip 42 is achieved in a very short period of time. It is believed that the coolant jet 38 actually penetrates a short distance into the chip 42 along the shear planes 44 formed between the individual thin sections 46. This rapid cooling of chip 42, believed to be accomplished in .1 second or less, disrupts the lattice structure of the chip 42. It is believed that the chip 42 is heated during the machining operation to such an extent that its lattice structure becomes semi-plastic, and when cooled by the coolant jet 38 so quickly, the semi-plastic lattice structure is solidified in a disrupted molecular configuration. Solidification of the chips 42 in a disrupted molecular configuration, at least within the cutting area 48, creates a brittle structure of substantially reduced ductility and bending strength. With the chips 42 in a brittle state, much less force is required to fracture the end 43 of chip 42 attached to workpiece 12 and remove the chip 42 from cutting area 48.

The chip 42 is fractured from workpiece 12 and removed by the high pressure developed within the cavity 60. A portion of the coolant jet 38 is vaporized by the heat developed in the cutting area 48. Since the cavity 60 provides a substantially sealed enclosure, high pressure is developed by the vaporized coolant jet 38 within the cavity 60 which is applied directly to the chip 42. In addition, pressure is exerted by the new coolant continuously exiting the release orifice 32 within the sealed cavity 60. The combined line pressure and vapor pressure of the coolant jet 38 is more than sufficient to snap or fracture the end 43 of chip 42 from the workpiece 12 and remove the entire chip 42 from the cutting area 48. In most applications, fracture of the chip 42 is achieved as it moves between the positions shown at Figures 3b, 3c. As a result, relatively short chips 42 are produced and they are forced under pressure away from the cutting area 48. Such is in contrast with existing machining systems in which chips are not typically fractured in small lengths but tend to form in long sections which wrap around the tool holder and cause problems of jamming.

An advantage is provided by the introduction of a coolant jet 38 from the release orifice 32 positioned within an essentially closed cavity 60 beneath the chip 42. It has been found that at least a small portion of the coolant jet travels along the upper surface 17 of cutting insert 18 once the leading end of the chip 42 is lifted above the insert surface 17 as in Figure 3c. This stream or film layer 62 of coolant jet 38 forms a hydrodynamic fluid support which resists contact of the chip 42 with the upper surface 17 of insert 18. The hydrodynamic fluid support provided by the film layer 62 urges the chip 42 upwardly from the upper surface 17 of insert 18 to avoid or at least reduce frictional contact therebetween which can lead to cratering and damaging abrasive contact. The coolant film layer 62 continues along the upper surface 17 of insert 18 and flows through microscopic surface irregularities in the cutting edge 19 of insert 18 and in the workpiece 12, which provides some lubrication to reduce the frictional contact therebetween during the cutting operation. The reduction of friction provided by the film layer 62, and in particular its creation of a hydrodynamic lift force, reduces the power requirements for making the cut. As is well known, the power required to make a cut includes not only the force required to shear the chips from the workpiece but also the force required to push the chips along the insert and away from the cut. In particular, the power required to remove the chips 42 is greatly reduced, because of the great reduction in friction between the upper surface 17 of insert 19 and the chips 42.

As mentioned above, several design aspects of the tool holder 10 are dependent on a variety of variables in any particular application including the speed and feed rates, type of material to be machined, horsepower rating of the machine and other factors. An example is provided below to illustrate how such factors are considered in the design of an appropriate tool holder 10 for a given application.

It is assumed in this example that it is desired to machine a cylinder of SAE 1020 steel having a diameter of 2 feet (0.6 m) and a shear strength of 50,000 psi ($3.4 \times 10^8$ N/m²) at a feed rate of 0.010 inches (0.025 cm) per revolution, at a speed of 500 surface-feet per minute (2.5 surface-meters per second) and at a depth of cut of 0.200 inches (0.508 cm).

The first step in the design procedure is to determine the horsepower required to make the cut.

$$Hp_{cut} = V_{mr}Hp_{unit} \tag{1}$$

Where:
$Hp_{unit}$ = horsepower required to machine one cubic inch of SAE 1020 steel
$V_{mr}$ = volume of metal removed.

According to the "Machinability Data Handbook", published by Metcut Laboratories, Cincinnati, Ohio, the horsepower required to machine one cubic inch of SAW 1020 steel, $Hp_{unit}$, is 1 Hp per cubic inch. To determine the volume of metal removed from workpiece 12 in each revolution, $V_{mr}$, the following relationship is used:

$$V_{mr} = DFS. \tag{2}$$

Where:
D = depth of cut (0.200 inch—0.508 cm)
F = feed rate (.010 inches (0.025 cm) per revolution)
S = Speed (500 surface-feet per minute —2.5 surface-meters per second).

Substituting the value determined for $V_{mr}$ in equation (2), and the value for $Hp_{unit}$ from the "Machinability Date Handbook", equation (1) is solved to obtain:

$$Hp_{cut} = 12 \text{ Hp (1Hp=745,7 Watt)}.$$

It has been determined experimentally that in order for sufficient velocity to be developed in the coolant jet 38 exiting release orifice 32, the horsepower of the jet 38 must be greater than the horsepower required to cut the material. To provide a factor of safety, the horsepower of the coolant jet 38 at the release orifice 32 is chosen to be 14 Hp.

Orifice cross sectional area

Having determined that the horsepower of the coolant jet 38 at the release orifice 32 should be about 14 Hp, the cross sectional area of the release orifice may be determined. Initially, the flow rate of the pump, $Q_p$, is determined using the following relationship:

$$Q_p = \frac{(Hp_{jet})\,(1714)}{P\;ME_{pump}}. \qquad (3)$$

Where:

$Hp_{jet}$ = jet horsepower (14 Hp)
P = pump pressure (psi)
$ME_{pump}$ = mechanical efficiency of the pump 30 At this point, an assumption is made as to the pressure provided by the pump 30. It has been found experimentally that a pump 30 with a rating of 1500 psi ($1 \times 10^7$ N/m²) is appropriate for many applications and is used here for this example. In addition, it is assumed that the pump 30 has a mechanical efficiency of about 85%. Solving equation (3), the result is as follows:

$$Q_p = 13.6 \text{ US gal./min. } (8.58 \times 10^{-4} m^3/s).$$

In order to determine the area of release orifice 32, $A_o$, a relationship has been derived relating $A_o$ to the flow rate of the pump 30, $Q_p$, and the pump pressure, P, assuming negligible drag losses at the orifice 32:

$$A_o = \frac{0.0263\,Q_p}{P}. \qquad (4)$$

Solving equation (4) with the values of $Q_p$ and P found above yields:

$$A_o = 0.0092 \text{ sq. inches } (0.059 \text{ cm}^2).$$

As mentioned above, the width of orifice 32 is preferably approximately equal to the depth of the cut to be machined in the workpiece 12. Since the depth of cut is assumed here to be 0.200 inch (0.508 cm) and therefore its length is about 0.046 inch (0.117 cm). Of course, this solution assumes a rectangular shaped orifice 32. It should be understood that orifices of other cross sections could be utilized as long as one transverse dimension is about equal to the depth of cut, and the total area is 0.0092 square inches (0.059 cm²).

Coolant delivery line

Having determined the flow rate of pump 30, $Q_p$, to be 13.6 gal./min. ($8.58 \times 10^{-4}$ m³/s), the cross-sectional area of coolant delivery line 28 may be calculated from the following relationship:

$$A_L = \rho \frac{Q_p}{V_c}. \qquad (5)$$

Where:

$A_L$ = area of coolant delivery line 28
$V_c$ = velocity of coolant within line 28
$\rho$ = density of a standard water-oil coolant

As mentioned above, in order to reduce turbulence and drag within delivery line 28, the velocity of the coolant therethrough should be in the range of about 20—40 ft/s (6.1 to 12.2 m/s). For purposes of this example, a velocity, $V_c$, of 30 ft/s (9.1 m/s) is assumed herein. Solving equation (5):

$$A_L = 0.145 \text{ sq. in. } (0.935 \text{ cm}^2).$$

The nominal size of delivery line 28, making it somewhat greater in cross sectional area to accommodate standard sizes, is therefore chosen to be 1/2 inch (1.27 cm).

The type of material, speed and feed rates and the depth of cut chosen in the above example represent a typical application. Tool holders with known cutting inserts and flood coolant systems are capable of running at such speeds. The advantage of this invention over such systems is that productivity can be drastically increased. It has been found that if the tool holder 10 is run at the speed and feed rates of the example, the life of the cutting insert is increased 2 to 5 times and the horsepower requirements are reduced compared to known tool holder and insert designs. This means that due to the reduction in friction and removal of heat provided by this invention, as described above, the horsepower needed to make the cut as calculated above is actually less than 14 Hp. Therefore, in addition to reducing horsepower requirements and extending cutting life, productivity may be increased using this invention by matching the horsepower available in the machine tool with the horsepower required to make the cut. This is done by setting up the system as described above, running it initially at the speed (500 surface feet per minute—2.5 surface-meters per second) chosen, noting the horsepower usage and then increasing the speed of the cut until the rated horsepower of the machine tool is reached. In this manner, more of the machine's capability is utilized and productivity is substantially increased. Although insert life decreases with increased speeds, the amount of material cut increases substantially.

**Claims**

1. A method of machining a workpiece with an insert having a top surface terminating with a cutting edge, at least one discharge orifice being provided and oriented to direct coolant over the top surface of the insert toward the cutting edge, comprising engaging the workpiece with the cutting edge to form chips over-lying the top surface of the insert, and ejecting a jet of coolant from the discharge orifice between the top surface of the insert and the chips, characterised in that the insert is moved at a feed rate such that the insert moves a predetermined distance with respect to the longitudinal axis of the workpiece for each revolution of the workpiece, in that the discharge orifice is positioned relative to the insert so that the discharge orifice is spaced from the cutting edge in the range of about 6 to 10 times the predetermined distance moved by the insert for each revolution of the workpiece, and in that the coolant jet is provided with a power which is greater than the power required to cut the material.

2. A method as claimed in Claim 1 wherein the engagement of the cutting edge with the workpiece and the formation of the chips produces substantial heat and wherein the coolant is confined within a cavity formed by at least the workpiece, cutting insert and chip.

3. A method as claimed in Claim 2 wherein the heat developed by the engagement of the cutting insert and workpiece and by the formation of the chips, is transferred to the coolant for rapid cooling of the chips.

4. A method as claimed in any preceding Claim, further comprising pressuring the coolant beneath the chip due to the confinement of the coolant within a cavity formed at least by the workpiece, cutting insert and chip, and breaking an end of the chip from the workpiece under the pressure applied by the coolant beneath the chip.

5. A method as claimed in Claim 4 wherein a portion of the coolant within the cavity is vapourised with the substantial heat produced by the engagement of the cutting edge with the workpiece and the formation of the chips, in order to produce a coolant and vapourised coolant mixture beneath the chip.

6. A method as claimed in any preceding Claim further comprising directing at least a portion of the coolant along the surface of the cutting insert, and creating a hydrodynamic fluid support with the coolant for resisting contact of the chip with the surface of the cutting insert.

7. A method as claimed in any preceding Claim further comprising cooling the chip to about the ambient temperature of the coolant in at least about 0.1 seconds by ejecting the coolant underneath the chip, and creating embrittlement of the chip due to rapid cooling wherein the molecules of the chip are solidified in a disrupted state.

8. A method as claimed in any preceding claim wherein coolant is directed at high velocity between the top surface of the insert and the chips.

9. An apparatus for machining a workpiece comprising an insert having a top surface terminating with a cutting edge, means defining a discharge orifice which lies on the top surface of the insert, means for conveying coolant to the discharge orifice and means for ejecting the coolant at velocity from the discharge orifice across the top surface of the insert toward the cutting edge, characterised in that the insert (18) is moved a predetermined distance with respect to the longitudinal axis of the workpiece (12) for each revolution of the workpiece, in that the discharge orifice (32) is spaced from the cutting edge (19) of the insert in the range of about 6 to 10 times said predetermined distance, and in that the ejecting means (38) has a power greater than the power required to cut the material.

10. An apparatus as claimed in claim 9 wherein the cutting insert (18) is adapted to engage the workpiece (12) to form chips (42) overlying the surface (17) of the cutting insert (18) and the discharge opening (32).

11. An apparatus as claimed in either claim 9 or 10 in which the cutting edge (19) is adapted to machine the workpiece (12) at a predetermined depth of cut, the discharge orifice (32) having a diameter approximately equal to the depth of cut.

12. An apparatus as claimed in either claim 9 or 10 in which the cutting edge (19) is adapted to machine the workpiece (12) at a predetermined depth of cut, the discharge orifice (32) having a non-circular cross section with a smaller and larger transverse dimension, the larger transverse dimension being approximately equal to the depth of cut.

13. An apparatus as claimed in any one of claims 10 to 12 in which a predetermined horsepower is required to form the chips (42), and wherein the coolant ejecting means (38) ejects the coolant at high velocity from the discharge orifice (32).

14. An apparatus as claimed in any one of claims 9 to 13 wherein the coolant conveying means comprises means (20, 30) for conveying the coolant to the means defining the discharge orifice (32), and means (34, 36) for conveying the coolant through the means defining the discharge orifice (32).

15. An apparatus as claimed in claim 14 in which the means for conveying coolant to the means defining the discharge orifice comprises a pump (30) and a delivery line being adapted to convey the coolant at a velocity in the range of about 20 to 40 feet per second (6.1 to 12.2 m/s$^{-1}$).

16. An apparatus as claimed in either claim 14 or 15 in which the means for conveying the coolant through the means defining the discharge orifice to the discharge orifice (32) comprises a main passageway (34), and a transition passageway (36) disposed between the main passageway and the release orifice.

17. An apparatus as claimed in claim 16 in which the main passageway (34) has a larger diameter than any portion of the transition passageway (36).

18. An apparatus as claimed in either claim 16 or 17 in which the transition passageway (36) is formed with a uniformly tapering wall (37) from the main passageway (34) to the release orifice (32).

19. An apparatus as claimed in any one of claims 16 to 18 in which the transition passageway (36) is formed with a highly polished wall (37).

20. An apparatus as claimed in any one of claims 16 to 19 in which the transition passageway (36) is frusto-conical in shape.

21. An apparatus as claimed in any one of claims 16 to 20 in which the transition passageway (36) is formed with uniformly tapering walls (37) from the main passageway to the discharge orifice, the angle formed by the walls (37) at the discharge orifice (32) being less than about 20°.

22. An apparatus as claimed in any one of claims 16 to 21 in which the discharge orifice (32) is circular in cross section, the length of the transition passageway (36) between the discharge orifice and the main passageway (34) being about 20 times the diameter of the discharge orifice.

23. An apparatus as claimed in any one of claims 16 to 21 in which the discharge orifice (32) is non-circular in cross section, the length of the transition passageway (36) between the discharge orifice and the main passageway (34) being about 20 times the diameter of an orifice of circular cross section having the same cross sectional area as the discharge orifice of non-circular cross section.

24. An apparatus as claimed in any one of claims 10 to 23 wherein the engagement of the workpiece (12) with the cutting edge (19) and the formation of the chips (42) produces a high temperature vapour barrier.

25. An apparatus as claimed in any one of claims 10 to 24 wherein the chips (42) form a substantially closed cavity (60) having walls enclosing at least the discharge orifice (32), the walls of the cavity being formed by the chips (42), the surface (17) of the cutting insert (18), and the workpiece (12), and wherein the coolant ejecting means (38) ejects the coolant at high velocity from the discharge orifice (32) and within the cavity (60).

26. An apparatus as claimed in claim 25 as dependent on claim 24 wherein the coolant is adapted to pierce the vapour barrier and remove the heat produced in the engagement of the workpiece (12) and formation of the chips (42), and to vapourize and develop pressure within the cavity (60) and beneath the chip (42) to separate the chip from the workpiece (12).

**Patentansprüche**

1. Verfahren zum Bearbeiten eines Werkstücks mit einem Einsatz, dessen obere Oberfläche in einer Schneidekante endet, wobei mindestens eine Auslassöffnung vorgesehen und zum Lenken von Kühlmittel über die obere Einsatzoberfläche auf die Schneidekante zu orientiert ist, mit Eingreifen der Schneidekante in das Werkstück, um über der oberen Einsatzoberfläche liegende Späne zu bilden, und Ausstossen eines Kühlmittelstrahles aus der Auslassöffnung zwischen der oberen Einsatzoberfläche und den Spänen, dadurch gekennzeichnet, dass der Einsatz mit einer solchen Zuführgeschwindigkeit bewegt wird, dass sich der Einsatz für jede Drehung des Werkstückes über eine vorbestimmte Entfernung hinsichtlich der Längsachse des Werkstücks bewegt, dass die Auslassöffnung relativ zum Einsatz so positioniert ist, dass die Auslassöffnung im Bereich von etwa des 6- bis 10-fachen der vom Einsatz für jede Werkstückdrehung durchlaufenen vorbestimmten Entfernung von der Schneidekante beanstandet ist, und dass der Kühlmittelstrahl eine Kraft besitzt, die grösser als die zum Schneiden des Werkstoffes benötigte Kraft ist.

2. Verfahren nach Anspruch 1, dadurch gekennzeichnet, dass der Eingriff der Schneidekante in das Werkstück und die Bildung der Späne eine bedeutsame Wärme erzeugt, und dass das Kühlmittel in einem von mindestens dem Werkstück, dem Schneideeinsatz und dem Span gebildeten Hohlraum eingeschlossen ist.

3. Verfahren nach Anspruch 2, dadurch gekennzeichnet, dass die durch den Eingriff des Schneideeinsatzes in das Werkstück und durch die Bildung der Späne entwickelte Wärme zum schnellen Kühlen der Späne an das Kühlmittel abgeführt wird.

4. Verfahren nach einem der vorhergehenden Ansprüche, weiterhin gekennzeichnet durch unter Druck Setzen des Kühlmittels unterhalb des Spanes aufgrund der Einschliessung des Kühlmittels innerhalb eines mindestens vom Werkstück, dem Schneideeinsatz und dem Span gebildeten Hohlraums, und Abbrechen eines Endes des Spanes vom Werkstück unter dem durch das Kühlmittel unterhalb des Spanes ausgeübten Druck.

5. Verfahren nach Anspruch 4, dadurch gekennzeichnet, dass ein Teil des Kühlmittels innerhalb des Hohlraumes durch die durch den Eingriff der Schneidekante in das Werkstück und die Bildung der Späne erzeugte bedeutsame Wärme verdampft wird, um unterhalb des Spanes eine Mischung von Kühlmittel und verdampftem Kühlmittel zu erzeugen.

6. Verfahren nach einem der vorhergehenden Ansprüche, weiterhin gekennzeichnet durch Lenken von mindestens einem Teil des Kühlmittels entlang der Oberfläche des Schneideeinsatzes und Erzeugen eines hydrodynamischen Flüssigkeitsträgers mit dem Kühlmittel, um einen Kontakt des Spanes mit der Oberfläche des Schneideeinsatzes Widerstand zu bieten.

7. Verfahren nach einem der vorhergehenden Ansprüche, weiterhin gekennzeichnet, durch Kühlen des Spans auf annähernd die Umgebungstemperatur des Kühlmittels innerhalb von mindestens rund 0,1 Sekunden durch Ausstossen des Kühlmittels unterhalb des Spanes, und Erzeugen von Versprödung des Spanes aufgrund der schnellen Abkühlung, wobei die Moleküle des Spanes in einem dissoziierten Zustand erstarren.

8. Verfahren nach einem der vorhergehenden Ansprüche, dadurch gekennzeichnet, dass Kühlmittel mit hoher Geschwindigkeit zwischen die obere Einsatzoberfläche und die Späne gelenkt wird.

9. Vorrichtung zum Bearbeiten eines Werkstücks mit einem Einsatz, dessen obere Oberfläche in einer Schneidekante endet, eine an der oberen Einsatzoberfläche liegende Auslassöffnung definierenden Mitteln, Mitteln zum Überführen von Kühlmittel zur Auslassöffnung und Mitteln zum Ausstossen des Kühlmittels mit hoher Geschwindigkeit aus der Auslassöffnung über die obere Einsatzoberfläche auf die Schneidekante zu, dadurch gekennzeichnet, dass der Einsatz (18) für jede Drehung des Werkstückes über eine vorbestimmte Entfernung hinsichtlich der Längsachse des Werkstücks (12) bewegt wird, dass die Auslassöffnung (32) im Bereich von etwa des 6- bis 10-fachen der besagten vorbestimmten Entfernung von der Schneidekante (19) des Einsatzes beabstandet ist, und dass das Ausstossmittel (38) eine Kraft besitzt, die grösser als die zum Schneiden des Werkstoffes benötigte Kraft ist.

10. Vorrichtung nach Anspruch 9, dadurch gekennzeichnet, dass der Schneideeinsatz (18) zum Eingreifen in das Werkstück (12) in der Lage ist, über der Oberfläche (17) des Schneideeinsatzes (18) und der Auslassöffnung (32) liegende Späne (42) zu bilden.

11. Vorrichtung nach Anspruch 9 oder 10, dadurch gekennzeichnet, dass die Schneidekante (19) zum Bearbeiten des Werkstücks (12) mit einer vorbestimmten Schnittiefe in der Lage ist, wobei die Auslassöffnung (32) einen Durchmesser besitzt, der der Schnittiefe annähernd gleich ist.

12. Vorrichtung nach Anspruch 9 oder 10, dadurch gekennzeichnet, dass die Schneidekante (19) zum Bearbeiten des Werkstücks (12) mit einer vorbestimmten Schnittiefe in der Lage ist, wobei die Auslassöffnung (32) einen nichtkreisförmigen Querschnitt mit einer kleineren und grösseren Querdimension besitzt, wobei die grössere Querdimension annähernd der Schnittiefe gleich ist.

13. Vorrichtung nach einem der Ansprüche 10 bis 12, dadurch gekennzeichnet, dass zum Bilden der Späne (42) eine vorbestimmte Kraft benötigt wird, und dass das Kühlmittelausstossmittel (38) das Kühlmittel mit hoher Geschwindigkeit aus der Auslassöffnung (32) ausstösst.

14. Vorrichtung nach einem der Ansprüche 9 bis 13, dadurch gekennzeichnet, dass das Kühlmittelüberführungsmittel Mittel (20, 30) zum Überführen des Kühlmittels zu dem die Auslassöffnung (32) definierenden Mittel und Mittel (34, 36) zum Durchführen des Kühlmittels durch das die Auslassöffnung (32) definierenden Mittel umfasst.

15. Vorrichtung nach Anspruch 14, dadurch gekennzeichnet, dass das Mittel zum Überführen von Kühlmittel zu dem die Auslassöffnung definierenden Mittel eine Pumpe (30) umfasst und dass eine Zuführleitung zum Überführen des Kühlmittels mit einer Geschwindigkeit im Bereich von rund 6,1 bis 12,2 m/s$^{-1}$ (20 bis 40 Fuss pro Sekunde) in der Lage ist.

16. Vorrichtung nach Anspruch 14 oder 15, dadurch gekennzeichnet, dass das Mittel zum Durchführen des Kühlmittels durch das die Auslassöffnung definierende Mittel zur Auslassöffnung (32) eine Hauptdurchführung (34) und eine zwischen der Hauptdurchführung und der Freigabeöffnung angeordnete Übergangsdurchführung (36) umfasst.

17. Vorrichtung nach Anspruch 16, dadurch gekennzeichnet, dass die Hauptdurchführung (34) einen grösseren Durchmesser als jeder Teil der Übergangsdurchführung (36) aufweist.

18. Vorrichtung nach Anspruch 16 oder 17, dadurch gekennzeichnet, dass die Übergangsdurchführung (36) mit einer von der Hauptdurchführung (34) bis zur Freigabeöffnung (32) gleichförmig verjüngten Wand (37) gebildet wird.

19. Vorrichtung nach einem der Ansprüche 16 bis 18, dadurch gekennzeichnet, dass die Übergangsdurchführung (36) mit einer hochpolierten Wand (37) gebildet wird.

20. Vorrichtung nach einem der Ansprüche 16 bis 19, dadurch gekennzeichnet, dass die Übergangsdurchführung (36) kegelstumpfförmig ist.

21. Vorrichtung nach einem der Ansprüche 16 bis 20, dadurch gekennzeichnet, dass die Übergangsdurchführung (36) mit von der Hauptdurchführung bis zur Auslassöffnung gleichförmig verjüngten Wänden (37) gebildet wird, wobei der durch die Wände (37) an der Auslassöffnung (32) gebildete Winkel weniger als rund 20° beträgt.

22. Vorrichtung nach einem der Ansprüche 16 bis 21, dadurch gekennzeichnet, dass die Auslassöffnung (32) kreisförmig im Querschnitt ist, wobei die Länge der Übergangsdurchführung (36) zwischen der Auslassöffnung und der Hauptdurchführung (34) rund das 20-fache des Durchmessers der Auslassöffnung beträgt.

23. Vorrichtung nach einem der Ansprüche 16 bis 21, dadurch gekennzeichnet, dass die Auslassöffnung (32) nichtkreisförmig im Querschnitt ist, wobei die Länge der Übergangsdurchführung (36) zwischen von der Auslassöffnung und der Hauptdurchführung (34) rund das 20-fache des Durchmessers einer Öffnung mit kreisförmigem Querschnitt derselben Querschnittsfläche wie die Auslassöffnung mit nichtkreisförmigem Querschnitt beträgt.

24. Vorrichtung nach einem der Ansprüche 10 bis 23, dadurch gekennzeichnet, dass der Eingriff der Schneidekante (19) in das Werkstück (12) und die Bildung der Späne (42) eine Dampfsperre hoher Temperatur erzeugt.

25. Vorrichtung nach einem der Ansprüche 10 bis 24, dadurch gekennzeichnet, dass die Späne (42) einen im wesentlichen geschlossenen Hohlraum (60) mit mindestens die Auslassöffnung (32) umschliessenden Wänden bilden, wobei die Wände des Hohlraums durch die Späne (42), die Oberfläche (17) des Schneideeinsatzes (18) und das Werkstück (12) gebildet werden, und dass das Kühlmittelausstossmittel (38) das Kühlmittel mit hoher Geschwindigkeit aus der Auslassöffnung (32) und innerhalb des Hohlraumes (60) ausstösst.

26. Vorrichtung nach Anspruch 25 mit Bezug auf Anspruch 24, dadurch gekennzeichnet, dass das Kühlmittel dazu in der Lage ist, die Dampfsperre zu durchstossen und in die bei dem Eingriff in das Werkstück (12) und der Bildung der Späne (42) erzeugte Wärme abzuführen, und zu verdampfen und innerhalb des Hohlraumes (60) und unterhalb des Spanes (42) Druck zu entwickeln, um den Span vom Werkstück (12) abzutrennen.

**Revendications**

1. Procédé pour l'usinage d'une pièce par enlèvement de copeaux, au moyen d'une pièce rapportée comportant une surface supérieure se terminant par un arête de coupe, au moins un orifice d'éjection étant prévu et orienté de façon à diriger un liquide de coupe sur la surface supérieure de la pièce rapportée vers l'arête de coupe, dans lequel on attaque la pièce avec l'arête de coupe pour former des copeaux situés au-dessus de la surface supérieure de la pièce rapportée et on projette un jet de liquide de coupe par l'orifice d'éjection entre la surface supérieure de la pièce rapportée et les copeaux, caractérisé en ce que l'on déplace la pièce rapportée avec une vitesse d'avance telle que la pièce rapportée se déplace d'une distance prédéterminée par rapport à l'axe longitudinal de la pièce pour chaque tour de la pièce, en ce que l'on positionne l'orifice d'éjection par rapport à la pièce rapportée de telle façon que l'orifice d'éjection soit éloigné de l'arête de coupe d'une distance comprise entre environ 6 et 10 fois la distance prédéterminée parcourue par la pièce rapportée pour chaque tour de la pièce, et en ce que l'on délivre le jet de liquide de coupe avec une puissance qui est supérieure à la puissance requise pour couper la matière.

2. Procédé suivant la revendication 1, dans lequel l'attaque de la pièce par l'arête de coupe et la formation des copeaux dégagent une substantielle quantité de chaleur et dans lequel le liquide de coupe est confiné dans une cavité formée par au moins la pièce, la pièce rapportée de coupe et le copeau.

3. Procédé suivant la revendication 2, dans lequel la chaleur dégagée par l'attaque de la pièce par la pièce rapportée de coupe et par la formation des copeaux est transférée au liquid de coupe pour assurer le refroidissement rapide des copeaux.

4. Procédé suivant l'une ou l'autre des revendications précédentes, dans lequel en plus on comprime le liquide de coupe sous le copeau par suite du confinement du liquide de coupe à l'intérieur d'une cavité formée au moins par la pièce, la pièce rapportée de coupe et le copeau, et on brise une extrémité du copeau venant de la pièce sous l'effet de la pression appliquée par le liquide de coupe sous le copeau.

5. Procédé suivant la revendication 4, dans lequel un partie du liquide de coupe se trouvant à l'intérieur de la cavité est vaporisée par la substantielle quantité de chaleur dégagée par l'attaque de la pièce par l'arête de coupe et par la formation des copeaux, afin de produire sous le coupeau un mélange de liquide de coupe et de liquide de coupe vaporisé.

6. Procédé suivant l'une ou l'autre des revendications précédentes, dans lequel en outre on dirige au moins une partie du liquide de coupe le long de la surface de la pièce rapportée et on créé avec le liquide de coupe un support fluide hydrodynamique pour résister au contact du copeau avec la surface de la pièce rapportée de coupe.

7. Procédé suivant l'une ou l'autre des revendications précédentes, dans lequel en outre on refroidit le copeau sensiblement jusqu'à la température ambiante du liquide de coupe en au moins environ 0,1 seconde en projetant le liquide de coupe en dessous du copeau, et on provoque la fragilisation du copeau par suite du refroidissement rapide au cours duquel les molécules du copeau sont solidifiées dans un état de rupture.

8. Procédé suivant l'une ou l'autre des revendications précédentes, dans lequel le liquide de coupe est dirigé à grande vitesse entre la surface supérieure de la pièce rapportée et les copeaux.

9. Dispositif pour l'usinage d'une pièce par enlèvement de copeaux, comprenant une pièce rapportée comportant une surface supérieure se terminant par une arête de coupe, des moyens définissant un orifice d'éjection qui se trouve sur la surface supérieure de la pièce rapportée, des moyens pour transporter un liquide de coupe jusqu'à l'orifice d'éjection et des moyens pour projeter le liquide de coupe avec une certaine vitesse par l'orifice d'éjection, à travers la surface supérieure de la pièce rapportée en direction de l'arête de coupe, caractérisé en ce que la pièce rapportée (18) est déplacée d'une distance prédéterminée par rapport à l'axe longitudinal de la pièce (12) pour chaque tour de la pièce, en ce que l'orifice d'éjection (32) est éloigné de l'arête de coupe (19) de la pièce rapportée d'une distance comprise entre environ 6 et 10 fois ladite distance prédéterminée et en ce que les moyens de projection (38) présentent une puissance supérieure à la puissance requise pour couper la matière.

10. Dispositif suivant la revendication 9, dans lequel la pièce rapportée de coupe (18) est apte à attaquer la pièce (12) pour former des copeaux (42) situés au-dessus de la surface (17) de la pièce rapportée de coupe (18) et de l'orifice d'éjection (32).

11. Dispositif suivant l'une ou l'autre des revendications 9 ou 10, dans lequel l'arête de coupe (19) est apte à usiner la pièce (12) à une profondeur de coupe prédéterminée, l'orifice d'éjection (32) ayant un diamètre approximativement égal à la profondeur de coupe.

12. Dispositif suivant l'une ou l'autre des revendications 9 ou 10, dans lequel l'arête de coupe (19) est apte à usiner la pièce (12) à une profondeur de coupe prédéterminée, l'orifice d'éjection (32) ayant une section transversale non circulaire avec une petite et une grande dimension transversale, la grande dimension transversale étant approximativement égale à la profondeur de coupe.

13. Dispositif suivant l'une ou l'autre des revendications 10 à 12, dans lequel une puissance prédéterminée est requise pour former les copeaux (42) et dans lequel les moyens de projection (38) du liquide de coupe projettent le liquide de coupe à grande vitesse par l'orifice d'éjection (32).

14. Dispositif suivant l'une ou l'autre des revendications 9 à 13, dans lequel les moyens de transport du liquide de coupe comprennent des moyens (20, 30) pour transporter le liquide de coupe jusqu'aux moyens définissant l'orifice d'éjection (32) et des moyens (34, 36) pour transporter le liquide de coupe à travers les moyens définissant l'orifice d'éjection (32).

15. Dispositif suivant la revendication 14, dans lequel les moyens pour transporter le liquide de coupe jusqu'aux moyens définissant l'orifice d'éjection comprennent une pompe (30) et une canalisation d'alimentation capable de transporter le liquide de coupe à une vitesse comprise entre environ 20 et 40 pieds par seconde (6,1 et 12,2 m/s).

16. Dispositif suivant l'une ou l'autre des revendications 14 ou 15, dans lequel les moyens pour transporter le liquide de coupe à travers les moyens définissant l'orifice d'éjection (32) comprennent un passage principal (34) et un passage de transition (36) disposé entre le passage principal et l'orifice d'éjection.

17. Dispositif suivant la revendication 16, dans lequel le passage principal (34) présente un diamètre plus grand que toute portion du passage de transition (36).

18. Dispositif suivant l'une ou l'autre des revendications 16 ou 17, dans lequel le passage de transition (36) est formé par une paroi (37) inclinée uniformément depuis le passage principal (34) jusqu'à l'orifice d'éjection (32).

19. Dispositif suivant l'une ou l'autre des revendications 16 à 18 dans lequel le passage de transition (36) est formé par une paroi (37) présentant un degré de polissage élevé.

20. Dispositif suivant l'une ou l'autre des revendications 16 à 19, dans lequel le passage de transition (36) présente une forme tronconique.

21. Dispositif suivant l'une ou l'autre des revendications 16 à 20, dans lequel le passage de transition (36) est formé par des parois (37) uniformément inclinées depuis le passage principal jusqu'à l'orifice d'éjection, l'angle formé par les parois (37) à l'orifice d'éjection (32) étant inférieur à environ 20°.

22. Dispositif suivant l'une ou l'autre des revendications 16 à 21 dans lequel l'orifice d'éjection (32) présente une section transversale circulaire, la longueur du passage de transition (36) entre l'orifice d'éjection et le passage principal (34) étant égale à environ 20 fois le diamètre de l'orifice d'éjection.

23. Dispositif suivant l'une ou l'autre des revendications 16 à 21, dans lequel l'orifice d'éjection (32) présente une section transversale non circulaire, la longueur du passage de transition (36) entre l'orifice d'éjection et le passage principal (34) étant égale à environ 20 fois le diamètre d'un orifice de forme circulaire qui aurait la même section que l'orifice d'éjection de forme non circulaire.

24. Dispositif suivant l'une ou l'autre des revendications 10 à 23, dans lequel l'attaque de la pièce (12) par l'arête de coupe (19) et la formation des copeaux (42) produisent une barriére de vapeur à haute température.

25. Dispositif suivant l'une ou l'autre des revendications 10 à 24 dans lequel les copeaux (42) forment une cavité (60) substantiellement fermée ayant des parois qui entourent au moins l'orifice d'éjection (32), les parois de la cavité étant formées par les copeaux (42), la surface (17) de la pièce rapportée de coupe (18) et la pièce (12), et dans lequel les moyens de projection (38) du liquide de coupe projettent le liquide de coupe à grande vitesse par l'orifice d'éjection (32) et à l'intérieur de la cavite (60).

26. Dispositif suivant la revendication 25 dans les limites de sa liaison avec la revendication 24, dans lequel le liquide de coupe est apte à percer la barrière de vapeur et à évacuer la chaleur dégagée lors de l'attaque de la pièce (12) et de la formation des copeaux (42), et à se vaporiser et établir une pression à l'intérieur de la cavité (60), et sous le copeau (42) pour séparer le copeau de la pièce (12).

Fig.1.

PUMP

Fig.2.

Fig. 3.

Fig. 3a.

Fig. 3b.

Fig. 3c.

Fig. 4.

PRIOR ART

2